# EUROPEAN PATENT APPLICATION

(11) **EP 4 316 249 A1**
(43) Date of publication of application: **07.02.2024**
(21) Application number: 22775321.7
(22) Date of filing: 16.03.2022
(51) Int. Cl.: A23D 7/005, A23J 3/00, A23L 5/00, A23L 13/00, A23L 13/40

(54) **OIL-IN-WATER EMULSION**

(30) Priority: 22.03.2021 JP 2021046864
(71) Applicant: Fuji Oil Holdings Inc., Izumisano-shi, Osaka 598-8540 (JP)
(72) Inventor: TAKEDA, Mariko, Izumisano-shi, Osaka 598-8540 (JP); YANAGISAWA, Masanobu, Izumisano-shi, Osaka 598-8540 (JP); OSAWA, Ryo, Izumisano-shi, Osaka 598-8540 (JP)
(74) Representative: Dennemeyer & Associates S.A.
(86) International application number: PCT/JP2022/011892
(87) International publication number: WO 2022/202532

(57) **Abstract**

An object of the present invention is to provide an oil-in-water emulsion having higher penetration into a dry textured protein in a non-vacuum environment than ever before. It has been found that an oil-in-water emulsion containing 10 to 35 mass% of vegetable oils and fats, 0.3 to 6.5 mass% of vegetable protein, and an emulsifier, and having a viscosity of 100 mPa·s or less and an emulsion particle size of 2.0 µm or less has good penetration into a dry textured protein in a non-vacuum environment.

## Description

### TECHNICAL FIELD

The present invention relates to an oil-in-water emulsion.

### BACKGROUND ART

From the recent trend of health consciousness and religious viewpoints, the market for meat-like food products using a vegetable protein raw material including soybean is expanding. However, such a meat-like food product has problems such as an odor of soybean, dry texture, and weak juiciness, and is required to have a flavor and texture close to those of meat.

NON-PATENT LITERATURE 1 describes various development examples of a textured soybean protein as a base of the meat-like food product, however, it is difficult to achieve quality that can be directly used as a meat substitute only by these developments, and it is also necessary to devise a processing method.

For example, for the odor of soybean, there is a general method of sufficiently immersing and washing the soybean in water before use to extract and remove an unpleasant component. However, this solution means requires time and effort for pretreatment such as water immersion and a tip such as adjustment of the degree of draining, and is not necessarily a versatile and effective means as a method for adjusting the meat-like food product.

Regarding the texture and juiciness, there is a method in which a textured protein material is rehydrated with water or a seasoning liquid, and then impregnated with oil under vacuum.

In this method, dryness is improved and the juiciness is imparted, so that a texture close to that of the meat can be obtained, but a vacuum impregnation apparatus must be introduced. In addition, there are problems that rehydration is required in advance, and that labor and cost are required because of a batch type, and it is not necessarily a versatile and effective means.

In order to solve these problems, PATENT LITERATURE 1 discloses a meat-like food product to which meat-like quality is imparted by impregnating a dry textured vegetable protein with an emulsified seasoning liquid and then performing heat treatment at 70°C or higher and lower than 100°C, and a method for producing the same.

However, since heating causes undesirable phenomena such as separation of oil and water and increase in particle size, there is a possibility that the oil does not sufficiently penetrate into the dry textured protein, and there is room for improvement.

### CITATION LIST

### PATENT LITERATURE

PATENT LITERATURE 1: JP-A-2020-158562

### NON-PATENT LITERATURE

NON-PATENT LITERATURE 1: Progress of Textured Soybean Protein Food Product, Cooking Science, Vol. 20, No. 4, (1987) pp. 42-52

### SUMMARY OF INVENTION

### PROBLEMS TO BE SOLVED BY INVENTION

An object of the present invention is to provide an oil-in-water emulsion having improved penetration into the dry textured protein in a non-vacuum environment than ever before.

### SOLUTION TO PROBLEMS

As a result of intensive efforts, the present inventors have found that an oil-in-water emulsion containing 10 to 35 mass% of vegetable oils and fats, 0.3 to 6.5 mass% of vegetable protein, and an emulsifier, and having a viscosity of 100 mPa·s or less and an emulsion particle size of 2.0 µm or less has good penetration into a dry textured protein in a non-vacuum environment, and have completed the present invention.

That is, the present invention is as follows.
(1) An oil-in-water emulsion for impregnation into a dry textured protein in a non-vacuum environment, the oil-in-water emulsion containing: 10 to 35 mass% of vegetable oils and fats; 0.3 to 6.5 mass% of vegetable protein; and an emulsifier, and having a viscosity of 100 mPa·s or less and an emulsion particle size of 2.0 µm or less.
(2) The oil-in-water emulsion according to (1), containing 10 to 25 mass% of the vegetable oils and fats.
(3) The oil-in-water emulsion according to (1), containing 1.5 to 3 mass% of the vegetable protein.
(4) The oil-in-water emulsion according to (2), containing 1.5 to 3 mass% of the vegetable protein.
(5) The oil-in-water emulsion according to (1), in which the emulsifier is one or more selected from the group consisting of lecithin, sucrose fatty acid ester, polyglycerin fatty acid ester, organic acid monoglyceride, and polysorbate.
(6) The oil-in-water emulsion according to (2), in which the emulsifier is one or more selected from the group consisting of lecithin, sucrose fatty acid ester, polyglycerin fatty acid ester, organic acid monoglyceride, and polysorbate.
(7) The oil-in-water emulsion according to (3), in which the emulsifier is one or more selected from the group consisting of lecithin, sucrose fatty acid ester, polyglycerin fatty acid ester, organic acid monoglyceride, and polysorbate.
(8) The oil-in-water emulsion according to (4), in which the emulsifier is one or more selected from the group consisting of lecithin, sucrose fatty acid ester, polyglycerin fatty acid ester, organic acid monoglyceride, and polysorbate.
(9) A method for producing an oil-in-water emulsion for impregnation into a dry textured protein in a non-vacuum environment, the oil-in-water emulsion having a viscosity of 100 mPa·s or less and an emulsion particle size of 2.0 µm or less, the method including the following steps (a) and (b):
   (a) a preliminary emulsification step of mixing raw materials containing vegetable oils and fats, a vegetable protein, an emulsifier, and water to obtain an oil-in-water emulsion; and
   (b) a homogenization step of adjusting the emulsion particle size of the oil-in-water emulsion after the preliminary emulsification step to 2.0 µm or less.
(10) The method for producing the oil-in-water emulsion for impregnation into the dry textured protein in a non-vacuum environment according to (9), in which the emulsifier is one or more selected from the group consisting of lecithin, sucrose fatty acid ester, polyglycerin fatty acid ester, organic acid monoglyceride, and polysorbate.
(11) A method for producing a meat-like textured protein, the method including impregnating a dry textured protein with the oil-in-water emulsion according to (1).
(12) A method for producing a meat-like textured protein, the method including impregnating a dry textured protein with the oil-in-water emulsion according to (5).
(13) A method for producing a vegetable protein food product, the method including blending the textured protein obtained by the production method according to (11).
(14) A method for producing a vegetable protein food product, the method including blending the textured protein obtained by the production method according to (12).

### EFFECTS OF INVENTION

The oil-in-water emulsion of the present invention has improved penetration into a dry textured protein material in a non-vacuum environment, thereby improving the texture and flavor of the meat-like food product more than before. In addition, there is no need for complicated steps and equipment for vacuum impregnation with oil after rehydration as in the conventional art.

### DESCRIPTION OF EMBODIMENTS

Hereinafter, embodiments of the present invention will be described in detail.

### (Oil-in-water emulsion)

The oil-in-water emulsion of the present invention contains 10 to 35 mass% of vegetable oils and fats, 0.3 to 6.5 mass% of vegetable protein, and an emulsifier. Further, the oil-in-water emulsion of the present invention has a viscosity of 100 mPa·s or less and an emulsion particle size of 2.0 µm or less.

The oil-in-water emulsion of the present invention has good penetration into a dry textured protein material in a non-vacuum environment.

### (Vegetable oils and fats)

Specific examples of the vegetable oils and fats include rapeseed oil, soybean oil, sunflower seed oil, cottonseed oil, peanut oil, rice bran oil, corn oil, safflower oil, olive oil, kapok oil, sesame oil, evening primrose oil, palm oil, shea butter, sal fat, cacao butter, coconut oil, palm kernel oil, and the like, or processed oils and fats obtained by subjecting these oils to one or more treatments selected from hydrogenation, fractionation, and transesterification.

An amount of the vegetable oils and fats is 10 to 35 mass%, and preferably 10 to 25 mass%. When the amount is less than 10 mass%, it is difficult to feel juiciness of a vegetable protein food product to be obtained. Further, when the amount is more than 35 mass%, viscosity increases, the oil-in-water emulsion does not easily penetrate into the dry textured protein, and the appearance is impaired.

Note that when the amount of the vegetable oils and fats is in the range of 10 to 35 mass%, moderate moisture is contained in the textured protein impregnated with the oil-in-water emulsion, and thus it is possible to reduce dryness of the vegetable protein food product obtained by blending the textured protein.

### (Vegetable protein)

Specific examples of the vegetable protein include proteins of soybean, pea, green bean, chickpea, pinto bean, coffee bean, pistachio, coconut, sesame, almond, peanut, macadamia nut, hazelnut, cashew nut, walnut, chestnut, sunflower seed, other beans, nuts, and seeds, or proteins obtained by subjecting these proteins to a treatment such as partial decomposition. From the industrial point of view, soybean or pea is preferred.

Examples of raw materials of the vegetable protein include separated vegetable proteins such as separated soybean protein and separated pea protein, vegetable milk such as bean milk and low fat bean milk, and vegetable milk cream such as soy milk cream.

An amount of the vegetable protein is 0.3 to 6.5 mass%, and preferably 0.4 to 3.0 mass%. Within this range, the oil-in-water emulsion has a low viscosity and a fine particle size, and can easily penetrate into the dry textured protein. When the amount is less than 0.3 mass%, it is difficult to maintain emulsion stability of the oil-in-water emulsion, and when the amount is more than 6.5 mass%, the viscosity increases, the oil-in-water emulsion does not easily penetrate into the dry textured protein, and the appearance is impaired.

### (Emulsifier)

Any emulsifier may be used as long as it is an emulsifier that is generally used for producing an edible emulsion. Examples of the emulsifier include emulsifiers such as lecithin, enzymatically decomposed lecithin, glycerin fatty acid ester, organic acid monoglyceride, polyglycerin fatty acid ester, propylene glycol fatty acid ester, polyglycerin condensed ricinoleic acid ester, sorbitan fatty acid ester, sucrose fatty acid ester, polyoxyethylene sorbitan fatty acid ester, and polysorbate, and one or more of these emulsifiers can be appropriately selected and used.

In the present invention, it is particularly preferred to contain one or more emulsifiers selected from the group consisting of lecithin, sucrose fatty acid ester, polyglycerin fatty acid ester, organic acid monoglyceride, and polysorbate. The emulsifier to be used more preferably contains a polyglycerin fatty acid ester having an HLB of 4 or more, and still more preferably an HLB of 4 to 12.

An amount of the emulsifier is preferably 0.05 to 3 mass%, more preferably 0.2 to 2.0 mass%, and still more preferably 0.3 to 1.5 mass% in the oil-in-water emulsion. When the amount is less than 0.05 mass%, it is difficult to maintain the emulsion stability of the oil-in-water emulsion. When the amount is more than 3 mass%, flavor is impaired.

### (Viscosity)

The oil-in-water emulsion according to the present invention needs to have a viscosity of 100 mPa·s or less, preferably 60 mPa·s or less, more preferably 50 mPa·s or less, and still more preferably less than 20 mPa·s.

With a viscosity within the above range, it is possible to facilitate penetration into the dry textured protein even in a non-vacuum environment. When the viscosity is more than 100 mPa·s, the oil-in-water emulsion does not easily penetrate into the dry textured protein, and adheres to a surface of the dry textured protein, and the appearance is impaired.

The viscosity is measured with a BM type viscometer (VISCOMETER TV - 10) manufactured by Toki Sangyo Co., Ltd. at 5°C and 60 rpm using a rotor No. 2.

### (Emulsion particle size)

The oil-in-water emulsion according to the present invention needs to have an emulsion particle size of 2.0 µm or less, and preferably less than 1.0 µm.

When the emulsion particle size is more than 2.0 µm, the stability of the oil-in-water emulsion is reduced.

When the emulsion particle size is 2.0 µm or less, the oil-in-water emulsion easily penetrates into voids in the dry textured protein.

Note that, the emulsion particle size is a volume-based median diameter of oil droplets. The emulsion particle size is measured by a particle size analyzer ("SALD-7100" manufactured by Shimadzu Corporation) using a laser diffraction/light scattering method.

### (Preparation of oil-in-water emulsion)

Hereinafter, a method for producing the oil-in-water emulsion according to the present invention will be described.

The oil-in-water emulsion of the present invention is produced by the following steps (a) and (b):
(a) a preliminary emulsification step of mixing raw materials containing vegetable oils and fats, a vegetable protein, an emulsifier, and water to obtain an oil-in-water emulsion; and
(b) a homogenization step of adjusting the median diameter of the oil-in-water emulsion after the preliminary emulsification step to 2.0 µm or less.

Specifically, the method is as follows.

The oil-in-water emulsion according to the present invention is prepared through a preliminary emulsification step of mixing the raw materials such as water in addition to the vegetable oils and fats, the vegetable protein, and the emulsifier, and additives, a homogenization step, a heat sterilization step, a cooling step, an aging step, and the like. The method for preparing the oil-in-water emulsion can be appropriately carried out by known means. The viscosity of the oil-in-water emulsion is adjusted so that the viscosity is 100 mPa·s or less through the steps (a) and (b). The emulsion particle size of the oil-in-water emulsion is adjusted to 2.0 µm or less in the step (b).

In the preliminary emulsification step of the oil-in-water emulsion according to the present invention, the vegetable oils and fats, the vegetable protein, the water, and the emulsifier, which are the raw materials, and various additives such as water-soluble polysaccharides, salts, dyes, and flavors are added and mixed while heating and stirring, for emulsification. An emulsification temperature in the present invention is preferably 50°C to 70°C, and more preferably 50°C to 65°C. In the preliminary emulsification step, various preparation tanks having a stirrer such as a propeller can be used.

For the homogenization step after a preliminary heating step, commonly known homogenization apparatuses can be used. Typically, a high-pressure homogenizer can be exemplified.

The heat sterilization step after homogenization is a step performed to sterilize the oil-in-water emulsion, and in the heat sterilization step, the oil-in-water emulsion is preferably heat sterilized at a product temperature of 90°C to 150°C, more preferably 110°C to 150°C, and still more preferably 120°C to 150°C. There are mainly two types of heat sterilization methods, an indirect heating method and a direct heating method, and as the heat sterilization method of the oil-in-water emulsion according to the present invention, a direct steam blowing method of the direct heating method is preferred.

As a direct heating type sterilization apparatus, for example, an ultra-high temperature sterilizer (manufactured by Iwai Kikai Kogyo Co., Ltd.) can be exemplified.

In the present invention, it is preferable to perform cooling after heat sterilization. In the cooling step, it is preferable to perform indirect cooling and/or evaporative cooling, and it is particularly preferable to perform the cooling step only by indirect cooling. By performing cooling by indirect cooling, it is possible to provide an oil-in-water emulsion capable of suppressing deterioration of flavor due to dissipation of flavor components at the time of production.

As an indirect cooling method, for example, a plate type indirect cooling apparatus (manufactured by Iwai Kikai Kogyo Co., Ltd.) can be exemplified.

In the oil-in-water emulsion according to the present invention, it is preferable to add the salts depending on an application as long as effects of the present invention are not impaired. For example, hexametaphosphate, diphosphate, sodium citrate, polyphosphate, sodium bicarbonate, and the like can be used singly or in combination of two or more.

In addition, saccharides, water-soluble polysaccharides, stabilizers, flavors, dyes, preservatives, and the like can be added as desired as long as the effects of the present invention are not impaired.

### (Application)

The oil-in-water emulsion according to the present invention can be used as an application for impregnation in the dry textured protein. In that case, the oil-in-water type emulsion may be directly penetrated into the dry textured protein. The dry textured protein impregnated with the oil-in-water emulsion of the present invention can be used as a meat-like textured protein. The meat-like textured protein can be directly used as a meat-like food product, or it can be blended to various foods as a meat substitute to produce the vegetable protein food product.

Here, the dry textured protein refers to a textured protein in a dry state, is a protein obtained by organizing the vegetable protein derived from, for example, beans such as soybeans, peas, broad beans, and chickpeas, and grains such as wheat and oats, by an extruder, and is not limited at all as long as it maintains a solid state (for example, granular, minced, block, slice, and the like) other than a powder state and is in a dry state. In the present disclosure, the dry textured protein can be directly used (in a dry state as it is) without any pretreatment.

As a method for impregnating the dry textured protein, the dry textured protein can be impregnated with the oil-in-water emulsion by a method such as coating, immersion, or spraying in a non-vacuum environment.

In addition, at the time of impregnation, other components, for example, a seasoning or the like may be separately adhered in addition to the oil-in-water emulsion.

When the oil-in-water emulsion is impregnated, the viscosity can be reduced by heating the oil-in-water emulsion as necessary.

Examples are described below. Hereinafter, "%" and "parts" respectively mean "mass%" and "parts by mass" unless otherwise specified.

### - Production of oil-in-water emulsion

### (Example 1)

Based on a total mass of 20 kg, 0.15 parts by mass of glycerin fatty acid ester A ("Glister PS-5S" manufactured by Sakamoto Yakuhin Kogyo Co., Ltd., HLB 4.5) is added to 10 parts by mass of vegetable oils and fats A (random transesterified oils and fats of palm kernel oil and palm oil: melting point 32°C), and mixed and dissolved to form an oil phase. Separately, in 63.3 parts by mass of water, 25 parts by mass of low-fat soy milk (low-fat soy milk "Bimi-tonyu" manufactured by Fuji Oil Co., Ltd.), 1.7 parts by mass of vegetable protein A (powdered separated soybean protein "FUJIPRO F" manufactured by Fuji Oil Co., Ltd.), 0.25 parts by mass of glycerin fatty acid ester B ("Glister MS-5S" manufactured by Sakamoto Yakuhin Kogyo Co., Ltd., HLB 11.6), and 0.2 parts by mass of a dye are dissolved to adjust an aqueous phase. The oil phase and the aqueous phase were mixed and pre-emulsified in the emulsion tank, and homogenized with a high-pressure homogenizer at a homogenization pressure of 3MPa, then sterilized by a direct heating method at 149°C for 4 seconds with an ultra-high temperature sterilizer (manufactured by Iwai Kikai Kogyo Co., Ltd.), homogenized with a high-pressure homogenizer at a homogenization pressure of 6MPa to 15MPa, and then immediately cooled to obtain an oil-in-water emulsion of Example 1.

### (Example 2)

An oil-in-water emulsion of Example 2 was obtained in the same manner as in Example 1 except that the oils and fats were 20 parts by mass of vegetable oils and fats B (refined coconut oil), and the emulsifiers were 0.15 parts by mass of glycerin fatty acid ester A ("Glister PS-5S" manufactured by Sakamoto Yakuhin Kogyo Co., Ltd., HLB 4.5), 0.25 parts by mass of glycerin fatty acid ester B ("Glister MS-5S" manufactured by Sakamoto Yakuhin Kogyo Co., Ltd., HLB 11.6), and 0.1 parts by mass of glycerin fatty acid ester C ("Poem DS100A " manufactured by Riken Vitamin Co., Ltd., HLB 7.7) in Example 1.

### (Example 3)

An oil-in-water emulsion of Example 3 was obtained in the same manner as in Example 1 except that 30 parts by mass of vegetable oils and fats A (random transesterified oils and fats of palm kernel oil and palm oil: melting point 32°C) and 1.7 parts by mass of vegetable protein A (powdered separated soybean protein "FUJIPRO F" manufactured by Fuji Oil Co., Ltd.) were used in Example 1.

### (Example 4)

An oil-in-water emulsion of Example 4 was obtained in the same manner as in Example 1 except that 35 parts by mass of vegetable oils and fats B (refined coconut oil) as the oils and fats, 45 parts by mass of soy milk cream (soy milk cream "Ko-cream" manufactured by Fuji Oil Co., Ltd.) as the soy milk, and 0.2 parts by mass of sodium citrate were used in Example 1.

### (Example 5)

An oil-in-water emulsion of Example 5 was obtained in the same manner as in Example 1 except that 10 parts by mass of vegetable oils and fats B (refined coconut oil) was used as the oils and fats, the low-fat soy milk (low-fat soy milk "Bimi-tonyu" manufactured by Fuji Oil Co., Ltd.) was not blended, and 0.5 parts by mass of vegetable protein A (powdered separated soybean protein "FUJIPRO F" manufactured by Fuji Oil Co., Ltd.) and 0.2 parts by mass of sodium citrate were used in Example 1.

### (Example 6)

An oil-in-water emulsion of Example 6 was obtained in the same manner as in Example 1 except that 20 parts by mass of vegetable oils and fats B (refined coconut oil) as the oils and fats, 16 parts by mass of low-fat soy milk (low-fat soy milk "Bimi-tonyu" manufactured by Fuji Oil Co., Ltd.), 6.0 parts by mass of vegetable protein B (partially decomposed powdered separated soybean protein "FUJIPRO CLE" manufactured by Fuji Oil Co., Ltd.) as the vegetable protein, and 0.2 parts by mass of sodium citrate were used in Example 1.

### (Comparative Example 1)

An oil-in-water emulsion of Comparative Example 1 was obtained in the same manner as in Example 1 except that 30 parts by mass of vegetable oils and fats B (refined coconut oil) as the oils and fats, 16 parts by mass of low-fat soy milk (low-fat soy milk "Bimi-tonyu" manufactured by Fuji Oil Co., Ltd.), 7.0 parts by mass of vegetable protein B (powdered separated soybean protein "FUJIPRO CLE" manufactured by Fuji Oil Co., Ltd.) as the vegetable protein, and 0.2 parts by mass of sodium citrate were used in Example 1.

### (Comparative Example 2)

An oil-in-water emulsion of Comparative Example 2 was obtained in the same manner as in Example 1 except that 45 parts by mass of vegetable oils and fats A (random transesterified oils and fats of palm kernel oil and palm oil: melting point 32°C) was used, and the emulsifiers were 0.15 parts by mass of glycerin fatty acid ester A ("Glister PS-5S" manufactured by Sakamoto Yakuhin Kogyo Co., Ltd., HLB 4.5), 0.25 parts by mass of glycerin fatty acid ester B ("Glister MS-5S" manufactured by Sakamoto Yakuhin Kogyo Co., Ltd., HLB 11.6), and 0.1 parts by mass of glycerin fatty acid ester C ("Poem DS100A " manufactured by Riken Vitamin Co., Ltd., HLB 7.7) in Example 1.

### (Comparative Example 3)

An oil-in-water emulsion of Comparative Example 3 was obtained in the same manner as in Example 1 except that 20 parts by mass of vegetable oils and fats A (random transesterified oils and fats of palm kernel oil and palm oil: melting point 32°C) was used, the low-fat soy milk (low-fat soy milk "Bimi-tonyu" manufactured by Fuji Oil Co., Ltd.) was not blended, and 0.2 parts by mass of vegetable protein A (powdered separated soybean protein "FUJIPRO F" manufactured by Fuji Oil Co., Ltd.) was used in Example 1.

In addition, (1) measurement of emulsion particle size and (2) viscosity measurement were evaluated as follows.
(1) Measurement of emulsion particle size: The particle size of the oil-in-water emulsion was measured by dispersing a small amount of the oil-in-water emulsion in water and measuring the particle size at 25°C by a particle size analyzer ("SALD-7100" manufactured by Shimadzu Corporation) using the laser diffraction/light scattering method. [Unit: µm]
   The emulsion particle size of 2.0 µm or less was evaluated as acceptable. Further, within an acceptable range, a sample having a particle size of 1.0 µm or more and 2.0 µm or less was evaluated "Good", and a sample having a particle size of less than 1.0 µm was evaluated "Excellent" as having better emulsion stability. A sample having a particle size of more than 2.0 µm was evaluated "Poor".
(2) Viscosity measurement: The viscosity of the oil-in-water emulsion at product temperature 5°C was measured with a BM type viscometer (VISCOMETER TV -10) manufactured by Toki Sangyo Co., Ltd.) using a rotor No. 2. [Unit: mPa·s]

The viscosity was measured under the condition that the rotor rotational speed was 60 rpm at the time of measurement.

When the viscosity was 100 mPa·s or less, it was evaluated as acceptable, and further within the acceptable range, a sample having a viscosity of 20 mPa·s or more and 100 mPa·s or less was evaluated as "Good", and a sample having a viscosity of less than 20 mPa·s was evaluated as "Excellent" as having better emulsion stability. A sample having a viscosity of more than 100 mPa·s was evaluated "Poor".

The formulation and evaluation results of Examples 1 to 6 are shown in Table 1, and the formulation and evaluation results of Comparative Examples 1 to 3 are shown in Table 2.

**Table 1: Formulation**

| [Unit: part] | | | | | | |
|---|---|---|---|---|---|---|
| | Example 1 | Example 2 | Example 3 | Example 4 | Example 5 | Example 6 |
| Vegetable oils and fats A | 30 | - | 30 | - | - | - |
| Vegetable oils and fats B | - | 20 | - | 35 | 10 | 20 |
| Low-fat sov milk | 25 | 25 | 25 | - | - | 16 |
| Sov milk cream | - | - | - | 45 | - | - |
| Vegetable protein A | 1.5 | 1.5 | 1.7 | - | 0.5 | - |
| Vegetable protein B | - | - | - | - | - | 6 |
| Water | 63.5 | 53.5 | 43.3 | 13 | - | 58 |
| Emulsifier | 0.4 | 0.5 | 0.4 | 0.4 | 0.4 | 0.5 |
| Dye | 0.2 | 0.2 | 0.2 | 0.2 | 0.2 | 0.2 |
| Sodium citrate | - | - | - | 0.2 | 0.2 | 0.2 |
| Vegetable protein content (%) | 2.62 | 2.62 | 2.79 | 2.52 | 0.43 | 6.03 |
| Viscosity (mPa·s) | 8 | 12.1 | 28.7 | 56.9 | 6.1 | 33.4 |
| | Excellent: acceptable | Excellent: acceptable | Good: acceptable | Good: acceptable | Excellent: acceptable | Good: acceptable |
| Emulsion particle size (µm) | 1.101 | 0.762 | 1.457 | 1.434 | 0.936 | 0.784 |
| | Good: acceptable | Excellent: acceptable | Good: acceptable | Good: acceptable | Excellent: acceptable | Excellent: acceptable |

**Table 2: Formulation**

| [Unit: part] | | | |
|---|---|---|---|
| | Comparative Example 1 | Comparative Example 2 | Comparative Example 3 |
| Vegetable oils and fats A | 30 | 45 | 10 |
| Low-fat soy milk | 16 | 25 | - |
| Vegetable protein A | - | 1.5 | 0.2 |
| Vegetable protein B | 7 | - | - |
| Water | 48 | 28.5 | 79.5 |
| Emulsifier | 0.4 | 0.5 | 0.4 |
| Dye | 0.2 | 0.2 | 0.2 |
| Sodium citrate | 0.2 | - | - |
| Vegetable protein content (%) | 6.89 | 2.62 | 0.17 |
| Viscosity (mPa·s) | 120.8 | unmeasurable | 12.9 |
| | unacceptable | unacceptable | Excellent: acceptable |
| Emulsion particle size (µm) | 0.85 | unmeasurable | 4.301 |
| | Good: acceptable | unacceptable | unacceptable |

### <Immersion of oil-in-water emulsion in dry textured protein>

### [Examples 7 to 9 and Comparative Example 4]

Each of the oil-in-water emulsions obtained in Examples 1 to 3 and Comparative Example 1 was placed in a vat, the temperature was adjusted to 80°C, and a dry textured protein (dry textured protein "Vegeplus 2900" manufactured by Fuji Oil Co., Ltd.) was added thereto and immersed for 10 minutes in a non-vacuum environment, to obtain a food product in which the dry textured protein was impregnated with each oil-in-water emulsion.

Next, this was frozen and stored, warmed in a hot water bath, and then flavor evaluation was performed.

### (Flavor evaluation)

In a company, 5 taste panelists who were skilled in sensory evaluation of vegetable protein food product were asked to sample food products obtained in Examples 7 to 9 and Comparative Example 4, and the sensory evaluation was performed and scored for appearance, texture (dryness), and flavor (juiciness) according to the following evaluation criteria.

The evaluation results are shown in Table 3.

### (Evaluation criteria)

### - Appearance

5 points: very good (almost no white adhering substances on surface)
4 points: good
3 points: normal
2 points: slightly poor
1 point: poor (many white adhering substances on surface)

### - Texture

5 points: very good (feels almost no dryness)
4 points: good
3 points: normal
2 points: slightly poor
1 point: poor (feels very dry)

### - Juiciness

5 points: very good (feels juiciness very strongly)
4 points: good
3 points: normal
2 points: slightly poor
1 point: poor (feels almost no juiciness)

An average value of scores of the panelists was determined. Then, from the average value, a 5-grade evaluation from A to E was performed, and a food product with a grade of B or higher in all evaluation items was determined to be of acceptable quality as the meat-like food product.
A: 4.5 points or more
B: 3.5 points or more and less than 4.5 points
C: 2.5 points or more and less than 3.5 points
D: 1.5 points or more and less than 2.5 points
E: less than 1.5 points

**Table 3: Evaluation on meat-like food product**

| | Example 7 | Example 8 | Example 9 | Comparative Example 4 |
|---|---|---|---|---|
| Appearance | A | A | A | E |
| Texture | B | A | B | C |
| Juiciness | B | A | A | B |
| acceptable/unacceptable | acceptable | acceptable | acceptable | unacceptable |

From results in Tables 1 to 3, it has been confirmed that an oil-in-water emulsion having acceptable (1) emulsion particle size and (2) viscosity value has good immersion in the dry textured protein, and has good appearance, texture, and juiciness when subjected to sensory evaluation. Therefore, it was confirmed that the oil-in-water emulsion of the present invention is suitable as an application for immersion in the dry textured protein in a non-vacuum environment, and a product obtained by immersing the oil-in-water emulsion of the present invention in the dry textured protein provides meat-like texture and juiciness.

Therefore, it was found that the product obtained by immersing the oil-in-water emulsion of the present invention in the dry textured protein can be used as the meat-like textured protein, and various vegetable protein food products can be produced by blending the meat-like textured protein.

## Claims

1. An oil-in-water emulsion for impregnation into a dry textured protein in a non-vacuum environment, the oil-in-water emulsion comprising: 10 to 35 mass% of vegetable oils and fats; 0.3 to 6.5 mass% of vegetable protein; and an emulsifier, and having a viscosity of 100 mPa·s or less and an emulsion particle size of 2.0 µm or less.

2. The oil-in-water emulsion according to claim 1, comprising 10 to 25 mass% of the vegetable oils and fats.

3. The oil-in-water emulsion according to claim 1, comprising 1.5 to 3 mass% of the vegetable protein.

4. The oil-in-water emulsion according to claim 2, comprising 1.5 to 3 mass% of the vegetable protein.

5. The oil-in-water emulsion according to claim 1, wherein the emulsifier is one or more selected from the group consisting of lecithin, sucrose fatty acid ester, polyglycerin fatty acid ester, organic acid monoglyceride, and polysorbate.

6. The oil-in-water emulsion according to claim 2, wherein the emulsifier is one or more selected from the group consisting of lecithin, sucrose fatty acid ester, polyglycerin fatty acid ester, organic acid monoglyceride, and polysorbate.

7. The oil-in-water emulsion according to claim 3, wherein the emulsifier is one or more selected from the group consisting of lecithin, sucrose fatty acid ester, polyglycerin fatty acid ester, organic acid monoglyceride, and polysorbate.

8. The oil-in-water emulsion according to claim 4, wherein the emulsifier is one or more selected from the group consisting of lecithin, sucrose fatty acid ester, polyglycerin fatty acid ester, organic acid monoglyceride, and polysorbate.

9. A method for producing an oil-in-water emulsion for impregnation into a dry textured protein in a non-vacuum environment, the oil-in-water emulsion having a viscosity of 100 mPa·s or less and an emulsion particle size of 2.0 µm or less, the method comprising the following steps (a) and (b):
(a) a preliminary emulsification step of mixing raw materials containing vegetable oils and fats, a vegetable protein, an emulsifier, and water to obtain an oil-in-water emulsion; and
(b) a homogenization step of adjusting the emulsion particle size of the oil-in-water emulsion after the preliminary emulsification step to 2.0 µm or less.

10. The method for producing the oil-in-water emulsion for impregnation into the dry textured protein in a non-vacuum environment according to claim 9, wherein the emulsifier is one or more selected from the group consisting of lecithin, sucrose fatty acid ester, polyglycerin fatty acid ester, organic acid monoglyceride, and polysorbate.

11. A method for producing a meat-like textured protein, the method comprising impregnating a dry textured protein with the oil-in-water emulsion according to claim 1.

12. A method for producing a meat-like textured protein, the method comprising impregnating a dry textured protein with the oil-in-water emulsion according to claim 5.

13. A method for producing a vegetable protein food product, the method comprising blending the textured protein obtained by the production method according to claim 11.

14. A method for producing a vegetable protein food product, the method comprising blending the textured protein obtained by the production method according to claim 12.
